# EUROPÄISCHE PATENTSCHRIFT

(11) **EP 3 652 120 B1**
(45) Veröffentlichungstag und Bekanntmachung des Hinweises auf die Patenterteilung: **26.05.2021**
(21) Anmeldenummer: 18743686.0
(22) Anmeldetag: 15.06.2018
(51) Int. Cl.: C03B 23/049, C03B 23/09, C03B 23/045

(54) **HEISSFORMGEBUNGSWERKZEUG FÜR DIE HERSTELLUNG VON GLASCONTAINERN**
HOT FORMING TOOL FOR PRODUCING GLASS CONTAINERS
OUTIL DE FAÇONNAGE À CHAUD PAR ENLÈVEMENT DE MATIÈRE UTILISÉ POUR PRODUIRE DES CONTENANTS EN VERRE

(30) Priorität: 10.07.2017 DE 102017115397
(43) Veröffentlichungstag der Anmeldung: 20.05.2020
(73) Patentinhaber: SCHOTT Schweiz AG, 9001 St. Gallen (CH)
(72) Erfinder: OTERO, Marco, 9000 St. Gallen (CH); JUD, Xaver, 9217 Neukirch a. d. Thur (CH); GARBINI, Christian, 9200 Gossau (CH)
(74) Vertreter: Harbach, Thomas
(86) Internationale Anmeldenummer: PCT/EP2018/065968
(87) Internationale Veröffentlichungsnummer: WO 2019/011583

(56) Entgegenhaltungen:
- CN-U- 201 501 826
- DE-A1-102015 117 212
- US-A- 3 424 570

## Beschreibung

Die Erfindung betrifft ein Heißformgebungswerkzeug für die Herstellung von Glascontainern, welche als pharmazeutische Primärpackmittel dienen, sowie eine Vorrichtung für die Herstellung von Glascontainern.

Heißformgebungswerkzeuge wie Formrollen und Formdorne werden in Heißformgebungsprozessen von Glas zur Formung von pharmazeutischen Primärpackmitteln eingesetzt, wobei Formdorne die Innenoberfläche formen und Formrollen in der Regel die Außenoberfläche eines Glascontainers formen. Während für die Herstellung konventioneller Getränkeflaschen in der Regel ein Blasformverfahren eingesetzt wird, werden pharmazeutische Primärpackmittel aufgrund der höheren Anforderungen an die optische Inspizierbarkeit durch die Containerwandung in aller Regel aus Glasrohren als Halbzeug hergestellt. Die Herstellprozesse von Getränkeflaschen und pharmazeutischen Primärpackmitteln sind daher recht unterschiedlich und stellen weitgehend getrennte technische Gebiete dar.

Die Herstellung pharmazeutischer Primärpackmittel wie Spritzen, Karpulen oder Fläschchen erfolgt gemäß Stand der Technik üblicherweise wie im Folgenden beschrieben. Um das Ausgangsmaterial, in diesem Fall Glasrohr, in eine definierte Form zu bringen, wird das Glasrohr an mehreren Umformstationen umgeformt. Die Erhitzung des Glases auf die Umformtemperatur erfolgt dabei in der Regel über Gasbrenner an vorgeschalteten Heizstationen. Das heiße Glasrohr wird den Umformstationen über rotierende Futter zugeführt, wobei die Längsachse des Glasrohrs der Rotationsachse entspricht. Innerhalb eines Formsystems wird das Glas mittels Formrollen und einem Formdorn umgeformt, wobei sich die Formrolle auf der Außenseite des entstehenden Containers befindet und der Formdorn auf der Innenseite. Für die Umformung führen die Formrollen eine radiale Bewegung zur Rotationsachse bzw. Längsachse des Containers bzw. Rohrabschnitts durch. Der Dorn dient dazu, die Innenform des Produktes zu gewährleisten. Die Rollen und der Dorn werden zwischen den Formgebungstakten geschmiert, um zum einen die Reibung zwischen Glas und Formgebungswerkzeugen zu reduzieren und somit Oberflächendefekte zu verhindern. Hierfür werden in den heutigen Prozessen hohen Mengen an Öl eingesetzt, welche zudem eine kühlende Wirkung auf die Formwerkzeuge erzielen. Um die Werkzeugtemperaturen zusätzlich zu reduzieren, kommen auch Luftkühlungen von außen zum Einsatz, um ein Haften des Glases an den Werkzeugen zu verhindern.

DE1596650 enthält eine Maschine zur Herstellung von Flächen aus Glasrohren.

Die Nachteile des Stands der Technik sind, dass hohe Mengen an Formöl zur Schmierung und Kühlung der Formwerkzeuge eingesetzt werden. Beim Kontakt mit den heißen Formwerkzeugen verbrennt das Öl teilweise, wodurch sich Ablagerungen auf den Formwerkzeugen bilden, welche zu Geometrieabweichungen der Container, Partikelverunreinigungen und sonstigen Ablagerungen an den Containern führen können. Diese Ablagerungen an den Werkzeugen müssen regelmäßig entfernt werden. Dafür müssen die Formwerkzeuge ausgebaut und gereinigt werden, was zu einer Produktionsunterbrechung führt, welche die Maschine erkalten lässt. Bis die Formwerkzeuge wieder auf richtiger Temperatur sind, entstehen Anfahrverluste. Des Weiteren ist die Kühlung der Formwerkzeuge durch das Formöl relativ unkontrolliert, so dass konstante Temperaturen der Formgebungswerkzeuge und damit konstante Voraussetzungen für den Heißformgebungsprozess nicht sicher erreicht werden.

Auch die Kühlung der Formwerkzeuge durch Kühlluft ist problematisch, da das Formöl durch einen starken Kühlluftstrom aufgewirbelt und verteilt wird, was und zu einer starken Verunreinigung der gesamten Formgebungsmaschine und Fertigungsumgebung führen kann. Ebenso können durch die starke Luftbewegung Partikel auf die Formgebungsflächen der Formrollen gelangen, welche dann zu Ausschuss führen.

Aufgabe der vorliegenden Erfindung ist es, den Heißformgebungsprozess für die Herstellung von pharmazeutischen Primärpackmitteln dahingehend zu verbessern, dass Ausschuss durch Geometrieabweichungen und Partikelverunreinigungen reduziert werden und Ausfallzeiten der Formgebungsmaschine durch Reinigungsprozesse oder Wechsel der Heißformgebungswerkzeuge reduziert werden können, sowie ein entsprechendes Heißformgebungswerkzeug bereit zu stellen. Aufgabe der Erfindung ist ferner die Erhöhung der Standzeit der Heißformgebungswerkzeuge.

Die Aufgabe wird gelöst durch die unabhängigen Ansprüche. Bevorzugte Ausführungsformen sind in den abhängigen Ansprüchen ausgeführt.

Das erfindungsgemäß Heißformgebungswerkzeug für die Herstellung von Glascontainern umfasst eine Formrolle mit einer Formgebungsfläche, eine Aufnahme zur Aufnahme der Formrolle und einen Kühlkörper, der direkt oder indirekt mit der Aufnahme (3) verbunden ist, wobei die Formrolle drehbar an der Aufnahme gelagert ist, wobei die Formrolle in thermischem Kontakt zu dem Kühlkörper steht und der Kühlkörper Mittel für eine interne Kühlung aufweist, so dass Prozesswärme von der Formrolle an den Kühlkörper abgeführt werden kann.

Das erfindungsgemäße Heißformgebungswerkzeug zeichnet sich also dadurch aus, dass es eine rotierende Formrolle umfasst, welche über einen nicht mitrotierenden Kühlkörper kühlbar ist, da die Formrolle in thermischem Kontakt mit einem Kühlkörper steht, welcher eine interne Kühlung aufweist. Die von der Formrolle über das umzuformende Glas aufgenommene Prozesswärme kann somit an den Kühlkörper abgegeben werden, welcher in thermischem Kontakt mit der Formrolle steht und welcher eine interne Kühlung aufweist. Auf eine externe Kühlung der Formrolle durch größere Mengen von Formöl oder Kühlluft kann somit vorteilhaft verzichtet werden. Die Menge des eingesetzten Formöls kann auf eine Minimalmenge reduziert werden, welche für eine Trennwirkung von Glas und Formrolle benötigt wird. Mit dem erfindungsgemäßen Formwerkzeug ist die Kühlung der Formrolle auf Temperaturen von weniger als 300 °C und deutlich unterhalb der Flammtemperatur des Formöls möglich.

Bei der Formrolle handelt es sich bevorzugt um eine zylindersymmetrische Scheibe, welche im Bereich ihrer Mantelfläche die Formgebungsfläche aufweist, welche für den Glaskontakt ausgebildet ist. Die Kontur der Formgebungsfläche entspricht dabei typischerweise einem Abschnitt der Außenkontur des herzustellenden Glascontainers. Die Formrolle besteht typischerweise zumindest im Bereich der Formgebungsfläche aus einem hochwarmfesten Material wie Stahl und kann abschnittweise auch aus Aluminium oder einer Aluminiumlegierung bestehen.

Die Aufnahme dient der drehbaren Lagerung der Formrolle. Bevorzugt weist die Aufnahme ein Drehlager auf, welches die Formrolle aufnehmen kann und eine leichtläufige Rotation gewährleistet. Ebenso kann das Drehlager aber auch Bestandteil der Formrolle sein.

Der Kühlkörper kann ein beliebiger Körper sein, welcher in thermischem Kontakt zur Formrolle steht, jedoch nicht mit der Formrolle rotiert. Bevorzugt besteht der Kühlkörper aus einem Metall und mehr bevorzugt aus einem Metall mit besonders hoher Wärmeleitfähigkeit. Besonders bevorzugt besteht der Kühlkörper aus Aluminium, einer Aluminiumlegierung
oder einem Stahl.

Unter einem thermischen Kontakt zwischen Formrolle und Kühlkörper ist zu verstehen, dass Formrolle und/oder Kühlkörper durch ihre Form so ausgebildet sind oder Mittel vorgesehen sind, so dass ein möglichst guter thermischer Kontakt vorliegt. Die Wärmeübertragung zwischen Formrolle und Kühlkörper ist insbesondere größer als die Wärmeübertragung zwischen Formrolle und Aufnahme.

In einer bevorzugten Ausführungsform des Heißformgebungswerkzeuges ist die Verbindung von Formrolle und Aufnahme lösbar ausgebildet, bevorzugt als Schraubverbindung. Dadurch kann ein Werkzeugwechsel schnell erfolgen und Ausfallzeiten der Anlage reduziert werden.

In einer bevorzugten Ausführungsform des Heißformgebungswerkzeuges ist die Aufnahme mit dem Kühlkörper oder einem Teil des Kühlkörpers einstückig ausgebildet. Aufnahme und Kühlkörper können gemäß ihren unterschiedlichen Funktionen prinzipiell separate Bauelemente sein. Bevorzugt ist die Aufnahme aber mit dem Kühlkörper oder einem Teil des Kühlkörpers einstückig ausgebildet und es handelt sich um nur ein Bauelement. Aufnahme und Kühlkörper können z.B. aus Aluminium oder einer Aluminiumlegierung bestehen.

In einer weiteren bevorzugten Ausführungsform des Heißformgebungswerkzeuges ist der Kühlkörper umlaufend um die Aufnahme angeordnet, wodurch eine maximale Kühlung der Formrolle erzielt werden kann.

Weiter bevorzugt weisen Formrolle und Kühlkörper zueinander korrespondierende Kontaktflächen auf, zwischen denen ein Spalt ausgebildet ist. Dadurch kann ein guter thermischer Kontakt erreicht werden. Unter einer korrespondierenden Kontaktfläche ist hierbei ein Oberflächenabschnitt von der Formrolle oder dem Kühlkörper zu verstehen, in welchem Formrolle und Kühlkörper einen Abstand von 1,0 mm oder weniger aufweisen. Formrolle und Kühlkörper stehen in diesen Bereichen jedoch nicht in mechanischem Kontakt sondern lediglich in thermischem Kontakt.

Bevorzugt ist der Spalt zwischen Formrolle und Kühlkörper mit einem Fluid befüllbar, bevorzugt mit einem Öl. Um ein Austreten des Öls auszuschließen, können Dichtelemente vorgesehen sein. Das Öl verbessert den Wärmekontakt zwischen Formrolle und Kühlkörper. Ebenso kann der Spalt so ausgebildet sein, dass das Öl alleine aufgrund von Adhäsionskräften im Spalt gehalten wird. Der Spalt ist somit so ausgebildet oder abgedichtet, dass das Öl nicht austritt.

Bevorzugt beträgt der Abstand zwischen Formrolle und Kühlkörper im Bereich der korrespondierenden Kontaktflächen weniger als 0,5 mm, bevorzugt weniger als 0,2 mm und besonders bevorzugt zwischen 0,05 mm und 0,15 mm. Derartige Spaltmaße lassen sich mit herkömmlichen Toleranzen in der Metallbearbeitung gut realisieren und lassen ausreichend Spielraum für eine abweichende thermische Ausdehnung von Formrolle und Kühlkörper aufgrund unterschiedlicher Temperaturen oder Materialien.

In einer bevorzugten Ausführungsform des Heißformgebungswerkzeug sind Formrolle und Kühlkörper so ausgebildet, dass die korrespondierenden Kontaktflächen von Formrolle und Kühlkörper jeweils eine Fläche von wenigstens 0,25 πR², bevorzugt wenigstens πR² und besonders bevorzugt wenigstens 1,5 πR² aufweisen, wobei R der Radius der Formrolle ist. Je größer die korrespondierende Kontaktfläche relativ zur Querschnittsfläche der Formrolle ist, desto effektiver ist die Kühlung der Formrolle. Bevorzugt ist die korrespondierende Kontaktfläche von Formrolle und Kühlkörper also sogar größer als die Querschnittsfläche der Formrolle, was z.B. durch Vertiefungen in der Formrolle erreicht werden kann, in welche sich der Kühlkörper erstreckt.

In einer bevorzugten Ausführungsform umfassen die Mittel für eine interne Kühlung des Kühlkörpers einen Durchleitungskanal für ein fluides Kühlmittel, bevorzugt Wasser oder auch Wasser mit Additiven wie zum Beispiel einem Korrosionsschutzzusatz.

In einer bevorzugten Ausführungsform weist der Kühlkörper in seinem äußeren Bereich einen ringförmigen Abschnitt auf, durch welchen sich der Durchleitungskanal erstreckt. Die Lage des Durchleitungskanals im äußeren Bereich des Kühlkörpers befindet sich relativ dicht an der Formgebungsfläche der Formrolle, so dass die Kühlung hier besonders effizient ist.

In einer bevorzugten Ausführungsform des Heißformgebungswerkzeuges besteht der Kühlkörper aus einem oberen Segment und einem unteren Segment, welche dicht miteinander verbunden sind und zwischen welchen ein Abschnitt des Durchleitungskanals verläuft. Durch den zweiteiligen Aufbau kann der Kühlkörper mit dem Durchleitungskanal besonders einfach hergestellt werden.

In einer bevorzugten Ausführungsform des Heißformgebungswerkzeuges sind zwischen dem oberen Segment und dem unteren Segment des Kühlkörpers Dichtelemente angeordnet, welche die Dichtigkeit zwischen dem oberen Segment und dem unteren Segment dauerhaft gewährleisten.

In einer bevorzugten Ausführungsform des Heißformgebungswerkzeuges besteht die
Formrolle aus hochwarmfestem Stahl und/oder der Kühlkörper (4) aus Aluminium, Kupfer einer Aluminium- oder Kupferlegierung. Aufgrund der geringen Werkzeugtemperatur können Formrolle und Kühlkörper auch beide aus Aluminium oder einer Aluminiumlegierung bestehen. Durch die Verwendung von Aluminium kann das Gewicht der Formrolle besonders geringgehalten werden, was zu einem geringen Trägheitsmoment führt.

Die Erfindung umfasst ferner eine Vorrichtung für die Herstellung von Glascontainern. Die Vorrichtung für die Herstellung von Glascontainern ist dadurch gekennzeichnet, dass sie wenigstens ein Heißformgebungswerkzeug gemäß einem der vorhergehenden Ansprüche umfasst.

### Bezugszeichenliste

- 1: Heißformgebungswerkzeug
- 2: Formrolle
- 3: Aufnahme
- 4: Kühlkörper
- 5: ringförmiger Abschnitt des Kühlkörpers
- 7: Spalt
- 8: korrespondierende Kontaktfläche an Formrolle
- 9: korrespondierende Kontaktfläche an Kühlkörper
- 10: Durchleitungskanal
- 11: Formgebungsfläche
- 12: oberes Segment des Kühlkörpers
- 13: unteres Segment des Kühlkörpers
- 14: O-Ring
- 15: Kühlmittelanschlüsse
- 20: Rohrabschnitt / Pharmafläschchen
- 21: Halsbereich
- 22: Mündungsbereich
- 23: Haltefutter
- 24: Formgebungsdorn

### Figurenbeschreibung

- Fig. 1:: Schematische Darstellung der Heißformgebung eines Pharmafläschchens gemäß Stand der Technik
- Fig. 2:: Perspektivische Ansicht eines erfindungsgemäßen Heißformgebungswerkzeugs
- Fig. 3:: Aufsicht auf erfindungsgemäßes Heißformgebungswerkzeug
- Fig. 4:: Querschnittsansicht A-A durch erfindungsgemäßes Heißformgebungswerkzeug
- Fig. 5:: Querschnittsansicht B-B durch erfindungsgemäßes Heißformgebungswerkzeug

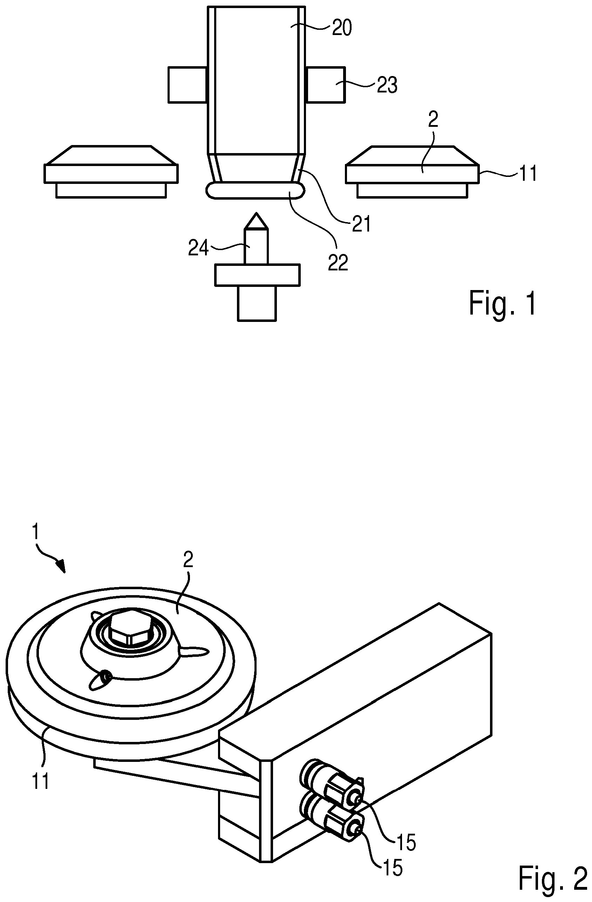

In Figur 1 ist die Heißformgebung eines Glascontainers, bzw. eines Rohrabschnittes (20) aus welchem der Glascontainer hergestellt wird, gemäß Stand der Technik schematisch dargestellt. Der Rohrabschnitt wird von einem Haltefutter (23) gehalten. Halsbereich (21) und Mündungsbereich (22) des Glascontainers werden durch die Formrollen (11) geformt, welche auf ihrer äußeren Mantelfläche die Formgebungsfläche aufweisen. Die Innenoberfläche des Glascontainers im Mündungsbereich wird durch einen Formdorn (24) geformt. Gemäß Stand der Technik werden Formrollen (11) und Formdorn (24) vor jedem Formgebungszyklus mit einem Formöl versehen, z.B. durch eine Betropfungsvorrichtung (nicht dargestellt).

In Figur 2 ist eine perspektivische Ansicht eines erfindungsgemäßen Heißformgebungswerkzeugs dargestellt. Die Formgebungsrolle (2) mit der Formgebungsfläche (11) sitzt auf einer Aufnahme (3), welche gleichzeitig einen Kühlkörper für die Formrolle (2) darstellt. Die Aufnahme mit dem Kühlkörper weist Kühlmittelanschlüsse (15) zur inneren Kühlung auf.

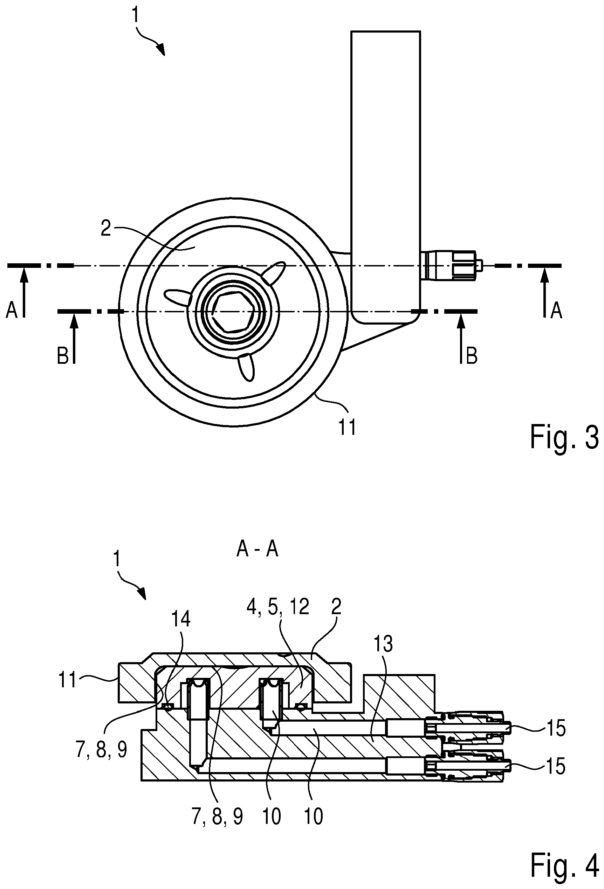

Figur 3 zeigt eine Aufsicht auf das erfindungsgemäße Heißformgebungswerkzeug gemäß Figur 2. Es sind zwei vertikale Schnittlinien B-B durch den Mittelpunkt der Formrolle sowie A-A durch die Formrolle in der Ebene der Kühlmittelanschlüsse dargestellt.

Figur 4 zeigt die Querschnittsansicht durch das erfindungsgemäße Heißformgebungswerkzeug in der Schnittlinie A-A gemäß Figur 3. Die Formrolle (2) mit der Formgebungsfläche (11) auf ihrer Mantelfläche weist auf Ihrer Unterseite eine Aussparung auf, in welche sich der Kühlkörper (4) erstreckt. Zwischen Kühlkörper (4) und Formrolle (2) ist ein Spalt (7) ausgebildet, wobei Kühlkörper (4) und Formrolle (2) sowohl auf der Mantelfläche des Kühlkörpers als auch auf dessen Oberseite korrespondierende Kontaktflächen (8,9) ausbilden. Durch den Kühlkörper (4) erstreckt sich ein Durchleitungskanal (10) für die Durchleitung von Kühlmittel. Der Kühlkörper (4) besteht aus einem oberen Segment (12) und einem unteren Segment (13), wobei ein Abschnitt des Durchleitungskanals (10) zwischen den beiden Segmenten (12,13) verläuft. Zwischen oberen Segment (12) und unterem Segment (13) ist ein O-Ring (14) angeordnet, welcher das Austreten von Kühlflüssigkeit verhindert. Der Durchleitungskanal (10) ist mit Kühlmittelanschlüssen (15) verbunden.

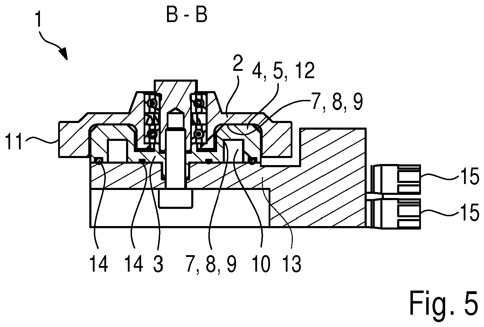

Figur 5 zeigt die Querschnittsansicht durch das erfindungsgemäße Heißformgebungswerkzeug (1) in der Schnittlinie B-B gemäß Figur 3. In dieser Querschnittsansicht durch die Drehachse der Formrolle ist ausgehend von Figur 4 außerdem die drehbare Aufnahme der Formrolle (2) an der Aufnahme (3) bzw. dem Kühlkörper (4) mittels einer Schraubverbindung und Kugellagern zu erkennen. Des Weiteren ist ein zweiter innerer O-Ring (14) zwischen dem oberen (12) und unteren Segment (13) des Kühlkörpers (4) zu erkennen.

Das erfindungsgemäße Heißformgebungswerkzeug stellt insgesamt eine Abkehr von den bisher eingesetzten Heißformgebungswerkzeugen mit außengekühlten Formrollen dar. Durch die indirekte Kühlung der Formrolle über einen nicht mitrotierenden Kühlkörper kann in dem klassischen Heißformgebungsprozess von Glascontainern für Pharmaverpackungen auf eine Außenkühlung der Formrolle komplett verzichtet werden. Die Temperatur der Formrolle kann konstant deutlich unter 300°C gehalten werden, wodurch ein Anhaften von Glas an der Formrolle sowie eine Entzündung von Formöl vermieden werden kann. Das erfindungsgemäße Heißformgebungswerkzeug zeichnet sich ferner durch eine höhere Standzeit aus, da Ablagerungen aus verbrannten Öl-Rückständen deutlich reduziert werden können und Glascontainer weniger Partikelverunreinigungen aufweisen.

Die Formrolle ist aufgrund der lösbaren Verbindung zur Aufnahme sehr schnell auswechselbar und eine ausgetauschte Formrolle erreicht aufgrund der geringen Wärmekapazität schnell wieder seine normale Betriebstemperatur. Ausfallzeiten durch Austausch der Heißformgebungswerkzeuge können so auf ein Minimum reduziert werden. Des Weiteren weist das erfindungsgemäße Heißformgebungswerkzeug ein sehr geringes Gewicht aus, was für den Formgebungsprozess vorteilhaft ist.

## Patentansprüche

1. Heißformgebungswerkzeug (1) für die Herstellung von Glascontainern, umfassend eine Formrolle (2) mit einer Formgebungsfläche (11),
eine Aufnahme (3) zur Aufnahme der Formrolle (2) und
einen Kühlkörper (4), der direkt oder indirekt mit der Aufnahme (3) verbunden ist wobei die Formrolle (2) drehbar an der Aufnahme (3) gelagert ist,
wobei die Formrolle (2) in thermischem Kontakt zu dem Kühlkörper (4) steht und der Kühlkörper (4) Mittel für eine interne Kühlung aufweist, so dass Prozesswärme von der Formrolle (2) an den Kühlkörper (4) abgeführt werden kann.

2. Heißformgebungswerkzeug gemäß Anspruch 1, wobei die Verbindung von Formrolle (2) und Aufnahme (4) lösbar ausgebildet ist, bevorzugt als Schraubverbindung.

3. Heißformgebungswerkzeug gemäß einem der vorhergehenden Ansprüche, wobei die Aufnahme (3) mit dem Kühlkörper (4) oder einem Teil des Kühlkörpers (4) einstückig ausgebildet.

4. Heißformgebungswerkzeug gemäß einem der vorhergehenden Ansprüche, wobei der Kühlkörper (4) umlaufend um die Aufnahme (3) angeordnet ist.

5. Heißformgebungswerkzeug gemäß einem der vorhergehenden Ansprüche, wobei Formrolle (2) und Kühlkörper (3) zueinander korrespondierende Kontaktflächen (8, 9) aufweisen, zwischen denen ein Spalt (7) ausgebildet ist.

6. Heißformgebungswerkzeug gemäß Anspruch 5, wobei der Spalt (7) mit einem Fluid befüllbar ist, bevorzugt mit einem Öl.

7. Heißformgebungswerkzeug gemäß Anspruch 5 oder 6, wobei der Abstand zwischen Formrolle (2) und Kühlkörper (3) im Bereich der korrespondierenden Kontaktflächen (8, 9) weniger als 0,5 mm, bevorzugt weniger als 0,2 mm und besonders bevorzugt zwischen 0,05 mm und 0,15 mm beträgt.

8. Heißformgebungswerkzeug gemäß einem der Ansprüche 5 bis 7, wobei Formrolle und Kühlkörper so ausgebildet sind, dass die korrespondierenden Kontaktflächen (8, 9) von Formrolle und Kühlkörper jeweils eine Fläche von wenigstens 0,25 πR², bevorzugt wenigstens πR² und besonders bevorzugt wenigstens 1,5 πR² aufweisen und wobei R der Radius der Formrolle (2) ist.

9. Heißformgebungswerkzeug gemäß einem der vorhergehenden Ansprüche, wobei die Mittel für eine interne Kühlung des Kühlkörpers (4) einen Durchleitungskanal (10) für ein fluides Kühlmittel, bevorzugt Wasser, umfassen.

10. Heißformgebungswerkzeug gemäß dem vorhergehenden Anspruch, wobei der Kühlkörper (4) in seinem äußeren Bereich einen ringförmigen Abschnitt (5) aufweist, durch welchen sich der Durchleitungskanal (10) erstreckt.

11. Heißformgebungswerkzeug gemäß einem der vorhergehenden Ansprüche, wobei der Kühlkörper (4) aus einem oberen Segment (12) und einem unteren Segment (13) besteht, welche dicht miteinander verbunden sind und zwischen welchen ein Abschnitt des Durchleitungskanals (10) verläuft.

12. Heißformgebungswerkzeug gemäß dem vorhergehenden Anspruch, wobei zwischen dem oberen Segment (12) und dem unteren Segment (13) des Kühlkörpers (4) Dichtelemente (14) angeordnet sind, welche die Dichtigkeit zwischen dem oberen Segment (12) und dem unteren Segment (13) dauerhaft gewährleisten.

13. Heißformgebungswerkzeug gemäß einem der vorhergehenden Ansprüche, wobei die Formrolle (2) aus hochwarmfestem Stahl und/oder der Kühlkörper (4) aus Aluminium, Kupfer einer Aluminium- oder Kupferlegierung besteht.

14. Vorrichtung für die Herstellung von Glascontainern, umfassend wenigstens ein Heißformgebungswerkzeug gemäß einem der vorhergehenden Ansprüche

## Claims

1. Hot-forming tool (1) for producing glass containers, comprising a forming roller (2) with a forming surface (11),
a holder (3) for receiving the forming roller (2) and
a heat sink (4) directly or indirectly connected to the holder (3),
wherein the forming roller (2) is rotatably mounted on the holder (3),
wherein the forming roller (2) is in thermal contact with the heat sink (4) and the heat sink (4) has means for internal cooling, so that process heat can be transferred from the forming roller (2) to the heat sink (4).

2. Hot-forming tool according to Claim 1, wherein the connection between the forming roller (2) and the holder (4) is of detachable design, preferably as a screw connection.

3. Hot-forming tool according to one of the preceding claims, wherein the holder (3) is integrally formed with the heat sink (4) or a part of the heat sink (4) .

4. Hot-forming tool according to one of the preceding claims, wherein the heat sink (4) is arranged circumferentially around the holder (3).

5. Hot-forming tool according to one of the preceding claims, wherein the forming roller (2) and the heat sink (3) have mutually corresponding contact surfaces (8, 9) between which a gap (7) is formed.

6. Hot-forming tool according to Claim 5, wherein the gap (7) can be filled with a fluid, preferably with an oil.

7. Hot-forming tool according to Claim 5 or 6, wherein the distance between the forming roller (2) and the heat sink (3) in the region of the corresponding contact surfaces (8, 9) is less than 0.5 mm, preferably less than 0.2 mm, and particularly preferably between 0.05 mm and 0.15 mm.

8. Hot-forming tool according to one of Claims 5 to 7, wherein the forming roller and heat sink are configured in such a manner that the corresponding contact surfaces (8, 9) of the forming roller and heat sink each have a surface area of at least 0.25 πR², preferably at least πR², and particularly preferably at least 1.5 πR², where R is the radius of the forming roller (2).

9. Hot-forming tool according to one of the preceding claims, wherein the means for internal cooling of the heat sink (4) comprise a transmission channel (10) for a fluid coolant, preferably water.

10. Hot-forming tool according to the preceding claim, wherein the heat sink (4) has an annular portion (5) in its outer region through which the transmission channel (10) extends.

11. Hot-forming tool according to one of the preceding claims, wherein the heat sink (4) comprises an upper segment (12) and a lower segment (13) which are tightly connected to one another and between which a portion of the transmission channel (10) runs.

12. Hot-forming tool according to one of the preceding claims, wherein sealing elements (14) are arranged between the upper segment (12) and the lower segment (13) of the heat sink (4) which permanently guarantee the tightness between the upper segment (12) and the lower segment (13).

13. Hot-forming tool according to one of the preceding claims, wherein the forming roller (2) is made of high temperature-resistant steel and/or the heat sink (4) is made of aluminum, copper, an aluminum or copper alloy.

14. Device for the production of glass containers comprising at least one hot-forming tool according to one of the preceding claims.

## Revendications

1. Outil de façonnage à chaud (1) pour la fabrication de contenants en verre, comprenant un rouleau de formage (2) muni d'une surface de façonnage (11),
un logement (3) destiné à loger le rouleau de formage (2) et
un corps de refroidissement (4), qui est relié directement ou indirectement au logement (3),
le rouleau de formage (2) étant monté rotatif sur le logement (3),
le rouleau de formage (2) étant en contact thermique avec le corps de refroidissement (4), et le corps de refroidissement (4) comprenant des moyens pour un refroidissement interne, de telle sorte que de la chaleur de traitement puisse être dissipée à partir du rouleau de formage (2) vers le corps de refroidissement (4) .

2. Outil de façonnage à chaud selon la revendication 1, dans lequel la liaison du rouleau de formage (2) et du logement (4) est configurée sous forme amovible, de préférence sous la forme d'une liaison vissée.

3. Outil de façonnage à chaud selon l'une quelconque des revendications précédentes, dans lequel le logement (3) est configuré d'un seul tenant avec le corps de refroidissement (4) ou une partie du corps de refroidissement (4).

4. Outil de façonnage à chaud selon l'une quelconque des revendications précédentes, dans lequel le corps de refroidissement (4) est agencé circonférentiellement autour du logement (3).

5. Outil de façonnage à chaud selon l'une quelconque des revendications précédentes, dans lequel le rouleau de formage (2) et le corps de refroidissement (3) comprennent des surfaces de contact mutuellement correspondantes (8, 9), entre lesquelles une fente (7) est formée.

6. Outil de façonnage à chaud selon la revendication 5, dans lequel la fente (7) peut être remplie avec un fluide, de préférence avec une huile.

7. Outil de façonnage à chaud selon la revendication 5 ou 6, dans lequel l'écart entre le rouleau de formage (2) et le corps de refroidissement (3) dans la zone des surfaces de contact correspondantes (8, 9) est inférieur à 0,5 mm, de préférence inférieur à 0,2 mm et de manière particulièrement préférée compris entre 0,05 mm et 0,15 mm.

8. Outil de façonnage à chaud selon l'une quelconque des revendications 5 à 7, dans lequel le rouleau de formage et le corps de refroidissement sont configurés de telle sorte que les surfaces de contact correspondantes (8, 9) du rouleau de formage et du corps de refroidissement présentent chacune une surface d'au moins 0,25 πR², de préférence d'au moins πR² et de manière particulièrement préférée d'au moins 1,5 πR², R étant le rayon du rouleau de formage (2).

9. Outil de façonnage à chaud selon l'une quelconque des revendications précédentes, dans lequel les moyens pour un refroidissement interne du corps de refroidissement (4) comprennent un canal de passage (10) pour un agent de refroidissement fluide, de préférence de l'eau.

10. Outil de façonnage à chaud selon la revendication précédente, dans lequel le corps de refroidissement (4) comprend dans sa zone extérieure une section annulaire (5), au travers de laquelle le canal de passage (10) s'étend.

11. Outil de façonnage à chaud selon l'une quelconque des revendications précédentes, dans lequel le corps de refroidissement (4) est constitué par un segment supérieur (12) et un segment inférieur (13), qui sont reliés de manière étanche l'un à l'autre et entre lesquels une section du canal de passage (10) s'étend.

12. Outil de façonnage à chaud selon la revendication précédente, dans lequel des éléments d'étanchéité (14) sont agencés entre le segment supérieur (12) et le segment inférieur (13) du corps de refroidissement (4), qui assurent de manière durable l'étanchéité entre le segment supérieur (12) et le segment inférieur (13).

13. Outil de façonnage à chaud selon l'une quelconque des revendications précédentes, dans lequel le rouleau de formage (2) est constitué d'acier réfractaire et/ou le corps de refroidissement (4) est constitué d'aluminium, de cuivre, d'un alliage d'aluminium ou de cuivre.

14. Dispositif pour la fabrication de contenants en verre, comprenant au moins un outil de façonnage à chaud selon l'une quelconque des revendications précédentes.
